# EUROPEAN PATENT SPECIFICATION

(11) **EP 3 522 638 B1**
(45) Date of publication and mention of the grant of the patent: **10.01.2024**
(21) Application number: 17854922.6
(22) Date of filing: 28.09.2017
(51) Int. Cl.: H04W 72/04

(54) **TERMINAL CAPABILITY NEGOTIATION METHOD, TERMINAL, AND BASE STATION**
ENDGERÄTEKAPAZITÄTAUSHANDLUNGSVERFAHREN, ENDGERÄT UND BASISSTATION
PROCÉDÉ DE NÉGOCIATION DE CAPACITÉ DE TERMINAL, TERMINAL ET STATION DE BASE

(30) Priority: 30.09.2016 CN 201610875718
(43) Date of publication of application: 07.08.2019
(73) Proprietor: Datang Mobile Communications Equipment Co., Ltd., Beijing 100085 (CN)
(72) Inventor: ZHANG, Dajun, Beijing 100191 (CN); XU, Fangli, Beijing 100191 (CN); WORRALL, Chandrika Kumudinie, Beijing 100191 (CN)
(74) Representative: dompatent von Kreisler Selting Werner - Partnerschaft von Patent- und Rechtsanwälten mbB
(86) International application number: PCT/CN2017/103891
(87) International publication number: WO 2018/059472

(56) References cited:
- EP-A1- 2 879 306
- CN-A- 101 360 334
- CN-A- 105 407 511
- US-A1- 2011 319 119
- US-A1- 2012 184 281
- US-A1- 2014 161 052
- US-A1- 2015 055 572
- "UE capabilities reporting", 3GPP DRAFT; R2-162312 UE CAPABILITIES REPORTING_V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Dubrovnik, Croatia; 20160411 - 20160415 XP051082372, Retrieved from the Internet: URL:http://www.3gpp.org/ftp/tsg_ran/WG2_RL 2/TSGR2_93bis/Docs/ [retrieved on 2016-01-01]
- INTEL CORPORATION: "Control plane aspects for LTE-NR interworking", 3GPP DRAFT; R2-162711, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Dubrovnik, Croatia; 20160411 - 20160415 2 April 2016 (2016-04-02), XP051082509, Retrieved from the Internet: URL:http://www.3gpp.org/ftp/tsg_ran/WG2_RL 2/TSGR2_93bis/Docs/ [retrieved on 2016-04-02]
- HUAWEI et al.: "UE Capabilities Reporting", 3GPP R2-162312, 2 April 2016 (2016-04-02), XP051082372,
- ERICSSON: "UE Capabilities in NB-IoT", 3GPP R2-162679, 2 April 2016 (2016-04-02), XP051082494,
- ERICSSON: "Capability signalling for more than 5 carriers", 3GPP DRAFT; FECA R2-154759 - CAPABILITIES FOR MORE THAN 5 CARRIERS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRA , vol. RAN WG2, no. Malmö, Sweden; 20151005 - 20151009 4 October 2015 (2015-10-04), XP051004939, Retrieved from the Internet: URL:http://www.3gpp.org/ftp/Meetings_3GPP_ SYNC/RAN2/Docs/ [retrieved on 2015-10-04]

## Description

### TECHNICAL FIELD

The present disclosure relates to the field of communication technology, in particular to a method for user equipment (UE) capability negotiation, a UE and a base station.

### BACKGROUND

As the network evolves continuously, network architecture cooperated/aggregated by the same kind of conventional radio access systems is not compatible with future development anymore. With the mixed deployment of the fifth generation (5G) communication system or other radio access system combined with 4G network, two or more different radio access systems are merged, which brings further improvement to performance of whole radio communication system.

In related technology, UE can merely perform dual-link operation under one system (such as LTE system or NR system), UE capability can be analyzed by a master node and a secondary node in the system, and resource is allocated accordingly without exceeding the UE capability.

However, in a scenario where multiple systems merge, UE capabilities for different systems are independent from each other. In order not to exceed a maximum capability of UE, a new UE capability negotiation mechanism is required to ensure that radio resources for multiple systems can be effectively coordinated.

EP 2 879 306 A1 discloses a method of supporting signal transmission and reception using two or more radio access technologies (RAT) and an apparatus therefor. The method includes receiving a first message, which requests information indicating whether access to a second communication network simultaneously supporting a first communication network and a second RAT is supported, from a base station of the first communication network supporting a first RAT; and transmitting a second message, which contains an indicator indicating whether simultaneous access to the first communication network and the second communication network is supported, to the base station of the first communication network in response to the first message.

"UE capabilities reporting" , 3GPP DRAFT, R2-162312 UE capabilities reporting_V1, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE generally discloses UE capability transfer mechanism and the need for early indication from the UE to the eNB for NB-loT, and several proposals have been proposed. Another example can be found in non patent document ERICSSON: "Capability signalling for more than 5 carriers", 3GPP DRAFT; R2-154759 and in patent document US 2012/184281 A1 (KIM SOENG HUN [KR] ET AL) 19 July 2012 (2012-07-19).

### SUMMARY

The invention is defined by the appended independent claims and further embodiments are described by the dependent claims.

### BRIEF DESCRIPTION OF THE DRAWINGS

Fig. 1 is a schematic diagram of a multilayer network covering environment;
Fig. 2 is a schematic implementing process diagram of a method for UE capability negotiation according to an embodiment of the present disclosure;
Fig. 3 is a schematic implementing process diagram of a method for UE capability negotiation according to the present disclosure;
Fig. 4 is a schematic implementing process diagram of a method for UE capability negotiation according to the present disclosure;
Fig. 5 is a schematic structural diagram of a UE according to an embodiment of the present disclosure;
Fig. 6 is a schematic structural diagram of a UE according to an embodiment of the present disclosure;
Fig. 7 is a schematic structural diagram of a base station according to an embodiment of the present disclosure;
Fig. 8 is a schematic structural diagram of a base station according to an embodiment of the present disclosure;
Fig. 9 is a schematic structural diagram of a base station according to an embodiment of the present disclosure;
Fig. 10 is a schematic structural diagram of a base station according to an embodiment of the present disclosure; and
Fig. 11 is a schematic diagram of a computer system that is suitable to achieve a method for UE capability negotiation, a UE and a base station according to embodiments of the present disclosure.

### DETAILED DESCRIPTION

Exemplary embodiments of the present disclosure are detailed with reference to the drawings. Although the exemplary embodiments of the present disclosure are illustrated in the drawings, it should be understood that the present disclosure can be achieved in various ways rather than limited to the embodiments described herein; on the contrary, the embodiments are intended to better understand the present disclosure and completely convey the scope of the present disclosure to those skilled in the art.

It is known by those skilled in the art that the embodiments of the present disclosure may be specifically embodied into systems, devices, apparatuses, methods or computer program products. The embodiments of the present disclosure may be specifically realized in a form of complete hardware, complete software (including firmware, resident software, microcode and so on), or a combination of hardware and software.

A method for UE capability negotiation is provided according to an embodiment of the present disclosure, to ensure that a maximum capability of a UE may not be exceeded in a scenario where multiple systems merge and effectively coordinate resources for the multiple systems.

The method includes: reporting, by a UE, individual capabilities of the UE for respective radio access networks in multiple systems and a merged capability of the UE for all radio access networks in the multiple systems to a network.

For a UE device that supports merging of multiple radio access systems, such as a UE that supports merging of an LTE access network and a 5G access network, the UE needs to report, to the network, a merged capability of the UE for the multiple systems such as a merged capability of the LTE radio access network and the 5G radio access network in addition to individual capabilities of the UE for respective radio access systems in the multiple systems.

The merged capability at least needs to include: band combinations supportable by the UE for respective radio access networks in the multiple systems, such as a band combination for the LTE radio access network and a band combination for the 5G access network; and a capability parameter corresponding to each band, such as a multiple input multiple output (MIMO) parameter. It should be understood that the above-mentioned merged capability parameters are merely exemplary and the merged capabilities involved in practical implementation are not limited thereto.

In the present disclosure, the capability parameter corresponding to each band may be identified by an index, for example, using Freq Band Indicator (frequency band indicator). In this way, a specific parameter value corresponding to each index may be defined in detail in an individual capability of the UE for a certain radio access system, which prevents a network device of one access system from analyzing capability parameter information of another access system.

When merging multiple systems (such as LTE and 5G NR), a master base station (in LTE or in 5G NR) may initial a UE capability negotiation process; in response to triggering of the master base station, the UE reports, to the network, the individual capabilities of the UE for the respective radio access networks in the multiple systems and the merged capability of the UE for all the radio access networks in the multiple systems.

In this process, the master base station recommends suitable capability indicating information (such as Freq Band indicator) to a secondary base station (in LTE or in 5G NR) based on one or more of the merged capability of the multiple systems reported by the UE, a radio network condition of the master base station and a radio resource management (RRM) strategy of the master base station. In addition, the master base station forwards, to the secondary base station, information about an individual capability of the UE for a target radio access system, i.e., a radio access system to which the secondary base station belongs, such that the secondary base station may determine a specific capability parameter. The secondary base station configures a radio parameter of a secondary link based on the recommended capability indicating information, and then transmits the radio parameter transparently to the UE via the master base station, thereby accomplishing a radio configuration process of the secondary link.

The UE capability negotiation process can be triggered by any affected side, e.g., the master base station or the secondary base station when a configuration of any radio parameter changes, to perform a negotiation. Then a changed radio parameter is configured to the UE.

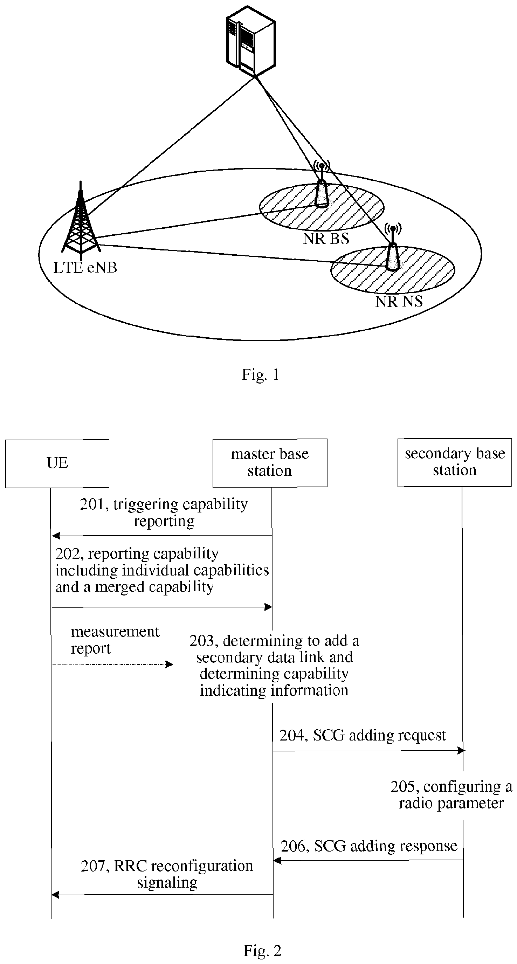

In a possible multilayer network covering environment as shown in Fig. 1, a nonideal logic interface is arranged between a long-term evolution (LTE) evolved Node B (eNB) which refers to a base station in an LTE radio access system and a new radio (NR) base station (BS) which refers to a base station in a 5G radio access system, and a user equipment (UE) may access the LTE system and the NR system simultaneously. In a case that the UE communicating with the LTE eNB enters a coverage of a cell corresponding to the NR BS, the LTE eNB may transfer a data bearer of the UE to the NR BS based on considerations such as a signal strength or load balancing, so as to achieve a data service of a higher throughput.

Fig. 2 illustrates a method for UE capability negotiation. In such method, a master base station may be an LTE eNB (a base station in an LTE radio access system) and a secondary base station may be an NR BS (a base station in a 5G radio access system), and the UE maintains a wireless connection with the master base station.

In some other embodiments, there may be a case that the master base station is an NR BS and the secondary base station is an LTE eNB, which has a similar implementation to a case that the master base station is the LTE eNB and the secondary base station is the NR BS, so description hereinafter is still based on the latter case.

The method for UE capability negotiation specifically includes steps 201 to 207.

In step 201, a master base station triggers a UE to report capability information.

In step 202, the UE reports the capability information to the master base station. The capability information includes information about an individual capability of the UE for an LTE radio access system, information about an individual capability of the UE for an NR radio access system, i.e., a 5G radio access system and information about a merged capability of the UE for the LTE and the NR.

In step 203, the master base station determines to add a new secondary data link based on at least one of the merged capability of the UE for the LTE and the NR reported by the UE, a current radio network situation (which may be obtained from a measurement report sent by the UE) and radio resource management (RRM) strategy information and selects capability indicating information based on the above-mentioned parameters.

In step 204, the master base station transmits a secondary cell group (SCG) adding request message to a secondary base station (5G base station). The message includes the capability indicating information selected by the master base station, the information about the individual capability of the UE for the NR (for the 5G system) and so on.

In step 205, the secondary base station configures a radio parameter of a secondary link based on recommended capability indicating information.

In step 206, the secondary base station transmits the radio parameter to the master base station via an SCG adding response message.

In step 207, the master base station transmits a radio resource control (RRC) reconfiguration signaling via an air interface and notifies the UE of the radio parameter configured by the secondary base station to complete a radio configuration process of the secondary link.

As described above, the UE capability negotiation process may be triggered by any affected side, e.g., the master base station or the secondary base station when a configuration of any radio parameter changes, to perform a negotiation.

According to an embodiment of the present disclosure, when the radio parameter needs to be changed, the master base station triggers and performs the negotiation.

In the embodiment, the UE maintains multi-link services with the master base station and the secondary base station.

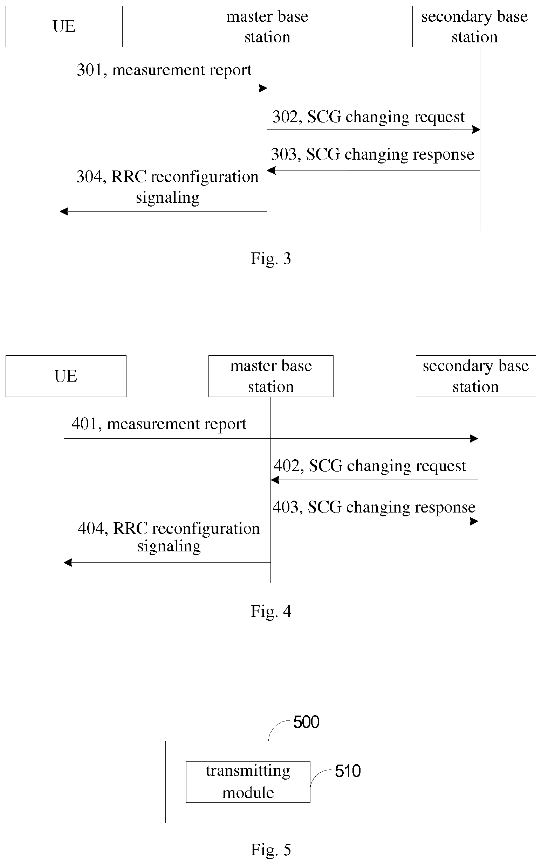

As shown in Fig. 3, the embodiment includes the following steps 301 to 304.

Step 301 includes: receiving, by a master base station (an LTE base station), measurement information from a UE, or obtaining other radio resource management strategy
Step 302 includes: determining, by the master base station, to change a radio configuration of a secondary link, triggering a renewing process of a merging set of LTE and NR by the master base station, and transmitting corresponding information to a secondary base station via an SCG changing request message.

Step 303 includes: performing an acceptance judgment by the secondary base station, and replying, by the secondary base station, an SCG changing response message to the master base station in a case that a change is acceptable, where the SCG changing response message includes a radio parameter reconfigured by the secondary base station, i.e., a changed radio parameter.

Step 304 includes: notifying the UE of the changed radio parameter by the master base station via an air interface radio resource management reconfiguration signaling.

In an embodiment of the present disclosure, when the radio parameter needs to be changed, the secondary base station triggers and performs the negotiation.

In the embodiment, the UE maintains multi-link services with the master base station and the secondary base station.

As shown in Fig. 4, the embodiment includes the following steps 401 to 404.

Step 401 includes: receiving new measurement information by a secondary base station (an NR base station). The new measurement information may be directly from a UE or may be forwarded by a master base station.

Step 402 includes: determining, by the secondary base station, to change a radio configuration of a secondary link, triggering a renewing process of a merging set of LTE and NR by the secondary base station, and transmitting corresponding information to a master base station via an SCG changing request message. The SCG changing request message includes a radio parameter reconfigured by the secondary base station, i.e., a changed radio parameter.

Step 403 includes: performing a judgment by the master base station, and replying, by the master base station, an SCG changing response message to the secondary base station in a case that a change is acceptable.

Step 404 includes: notifying the UE of the changed radio parameter by the master base station via an air interface radio resource management reconfiguration signaling.

A UE 500 is further provided in an embodiment of the present disclosure. As shown in Fig. 5, the UE 500 may specifically include a transmitting module 510, configured to report, to a network, individual capabilities of the UE 500 for respective radio access networks in multiple systems and a merged capability of the UE 500 for all radio access networks in the multiple systems.

In the embodiment, optionally, the merged capability includes, but not limited to, band combinations supportable by the UE for the respective radio access networks in the multiple systems and a capability parameter corresponding to each band.

In the embodiment, optionally, the capability parameter corresponding to each band may be identified by an index.

In the embodiment, optionally, a specific parameter value corresponding to each index may be defined in an individual capability of the UE for the radio access system.

In the embodiment, optionally, the transmitting module 510 may report, to a network, individual capabilities of the UE for respective radio access networks in multiple systems and a merged capability of the UE for all the radio access networks in the multiple systems in response to triggering from a master base station.

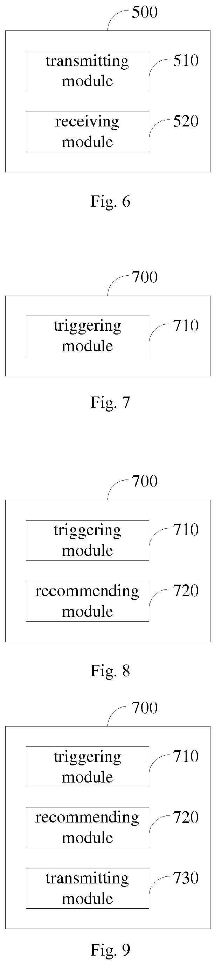

As shown in Fig. 6, the UE 500 further includes a receiving module 520, configured to receive a radio parameter from a master base station. The radio parameter is a radio parameter of a secondary link and is configured by a secondary base station based on capability indicating information recommended by the master base station. In addition, the radio parameter from the secondary base station is forwarded to the UE via the master base station.

The capability indicating information is recommended to the secondary base station by the master base station based on one or more of the merged capability of the UE 500 for all the radio access networks in the multiple systems reported by the UE 500, a radio network condition of the master base station and a radio resource management strategy of the master base station.

When recommending the capability indicating information to the secondary base station, the master base station forwards, to the secondary base station, an individual capability of the UE 500 for a radio access system to which the secondary base station belongs reported by the UE 500.

In the embodiment, optionally, the receiving module 520 is further used to receive a changed radio parameter sent by the master base station. In a case that the radio parameter needs to be changed, the master base station triggers and performs a negotiation to determine the changed radio parameter.

In the embodiment, optionally, the receiving module 520 is further used to receive a changed radio parameter sent by the master base station. In a case that the radio parameter needs to be changed, the secondary base station triggers and performs a negotiation to determine the changed radio parameter.

A base station 700 is further provided according to an embodiment of the present disclosure. As shown in Fig. 7, the base station 700 may specifically include a triggering module 710, used to trigger a UE to report individual capabilities of the UE for respective radio access networks in multiple systems and a merged capability of the UE for all radio access networks in the multiple systems.

In the embodiment, optionally, the merged capability includes but is not limited to band combinations supportable by the UE for the respective radio access networks in the multiple systems and a capability parameter corresponding to each band.

In the embodiment, optionally, the capability parameter corresponding to each band may be identified by an index.

In the embodiment, optionally, a specific parameter value corresponding to each index may be defined in an individual capability of the UE for the radio access system.

As shown in Fig. 8, the base station 700 further includes a recommending module 720, used to: recommend capability indicating information to a secondary base station based on one or more of the merged capability of the UE for all the radio access networks in the multiple systems reported by the UE, a radio network condition of a master base station and a radio resource management strategy of the master base station; and forward, to the secondary base station, an individual capability of the UE for a radio access network to which the secondary base station belongs, which is reported by the UE.

In an embodiment, optionally as shown in Fig. 9, the base station 700 may further include a transmitting module 730, used to transmit a radio parameter to the UE. The radio parameter is a radio parameter of a secondary link and is configured by a secondary base station based on capability indicating information recommended by a master base station.

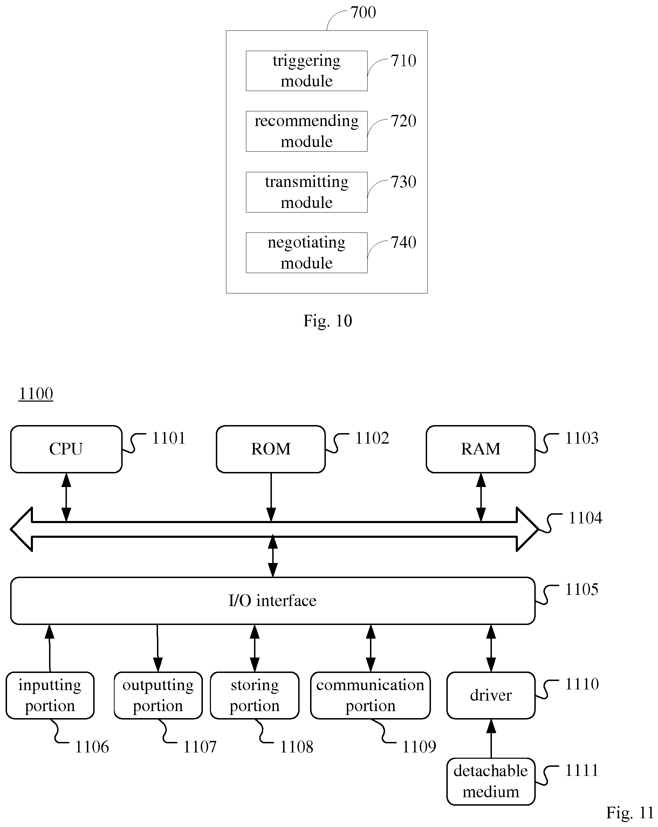

In an embodiment, optionally as shown in Fig. 10, the base station 700 may further include a negotiating module 740, used to trigger and perform a negotiation in a case that the radio parameter needs to be changed. The transmitting module 730 is further used to transmit a changed radio parameter to the UE.

The technical solutions described above have the following advantages or beneficial effects. The UE reports, to the network, the individual capabilities of the UE for the respective radio access networks in the multiple systems and the merged capability of the UE for all radio access networks in the multiple systems, such that the maximum capability of the UE may not be exceeded in a scenario where the multiple systems merges and the radio resources of the multiple systems can be effectively coordinated.

It should be understood that, such terms as "an embodiment" and "one embodiment" throughout the specification mean that an embodiment-related specific characteristic, structure or feature is included in at least one embodiment of the present disclosure. Hence, such terms as "in an embodiment" and "in one embodiment" here and there in the specification do not definitely indicate an identical embodiment. The specified characteristics, structures or features can be combined arbitrarily in one or more embodiments.

In various embodiments of the present disclosure, it should be understood that, values of serial numbers of the respective steps do not indicate an order of execution and do not limit implementations of the embodiments of the present disclosure. The order of execution of the respective steps is determined based on functions and inner logic thereof.

Furthermore, such terms as "system" and "network" in the present disclosure may be interchanged with each other.

It should be noted that, a term of "and/or" in the present disclosure merely describes an associated relationship between associated objects. Such term may indicate three kinds of relationships. For example, "A and/or B" may indicate only A, only B and a combination of A and B. In addition, the symbol "/" usually indicates an "or" relationship between two associated objects before and after the symbol.

In the embodiments of the present disclosure, it should be understood that, "B corresponding to A" indicates that B is related with A and may be determined based on A. In addition, determining B based on A does not mean determining B based on only A; and actually, B may be determined based on A and/or other information.

It should be understood that, the methods and devices according to the embodiments of the present disclosure may be achieved in other ways. The described embodiments directed to the devices are exemplary. The division of units is merely a division based on logic functions and may be achieved in other division ways. For example, multiple units or elements may be combined or integrated into another system, or some features may be neglected or not realized. In addition, illustrated or discussed couplings may be direct couplings or communication connections, or may be achieved by indirect couplings or communication connections via some interfaces, devices or units. The couplings may be electrical connection, mechanical connection or in other ways.

Furthermore, various functional units in the embodiments of the present disclosure may be integrated in one processing unit, or may be independent physically, or two or more of the functional units are integrated in one unit. The integrated units may be implemented in hardware or in hardware plus software functional units.

The integrated units implemented by software functional units may be stored in a computer readable storage medium. The software functional units is stored in a storage medium where stores several instructions to instruct a computer device (a personal computer, a server, a network side device or the like) to perform partial steps of transceiving methods according to the embodiments of the present disclosure. The storage medium includes various media that can store program codes, such as a U disk, a portable hard disk, a read-only memory (ROM), a random access memory (RAM), a magnetic disk, or a compact disc.

Reference may be made to Fig. 11, which illustrates a schematic structural diagram of a computer system 1100 that is suitable to achieve the method for UE capability negotiation, the UE and the base station according to the embodiments of the present disclosure.

As shown in Fig. 11, the computer system 1100 includes a central processing unit (CPU) 1101. The CPU 1101 may execute various proper actions and processings based on programs stored in a ROM 1102 or programs loaded to a RAM 1103 from a storing portion 1108. The RAM 1103 further stores various necessary programs and data for operations of the system 1100. The CPU 1101, the ROM 1102 and the RAM 1103 are connected to each other via a bus 1104. An input/output (I/O) interface 1105 is also connected to the bus 1104.

Components connected to the I/O interface 1105 include: an inputting portion 1106 such as keyboard and mouse, an outputting portion 1107 such as cathode ray tube (CRT), liquid crystal display (LCD) and loudspeaker, the storing portion 1108 such as hard disk, and a communication portion 1109, for example, network interface card such as LAN card and modem. The communication portion 1109 performs communication processing via a network such as the Internet. A driver 210 also needs to be connected to the I/O interface 1105. A detachable medium 211 such as magnetic disk, compact disc, photomagnetic disk and semiconductor storage needs to be installed on the driver 210, such that computer programs read from the detachable medium 211 may be conveniently installed in the storing portion 1108 according to needs.

Specifically, according to the embodiments of the present disclosure, the above-described process may be implemented as a computer software program. For example, an embodiment of the present disclosure provides a computer program product including a computer program that is tangibly included on a computer readable medium, where the computer program includes program codes for executing the method according to the flow chart. According to such embodiment, the computer program may be downloaded from the network via the communication portion 1109 and installed, and/or may be downloaded from the detachable medium 211 and installed.

Schematic process diagrams and block diagrams in the drawings illustrate achievable architectures, functions and operations of the system, method and computer program product according to the respective embodiments of the present disclosure. Each block in the schematic process diagrams and the block diagrams may represent a module, a program segment or a portion of codes. The module, the program segment or the portion of codes includes one or more executable instructions for realizing specified logic functions. It should be noted that, in some replacement implementations, functions labeled in blocks may take place in an order different from that as labeled in the drawings. For example, two connected blocks may be performed substantially concurrently in actual or may be performed in a reverse order, which depends on related functions. It should be further noted that, each block in the block diagrams and/or the schematic process diagrams and a combination of blocks in the block diagrams and/or the schematic process diagrams may be realized by a dedicated hardware-based system that performs specified functions or operations or may be realized by a combination of a dedicated hardware and computer instructions.

Related units or modules in the description of the embodiments of the present disclosure may be implemented in a software way or a hardware way. The described units or modules may be arranged in a processor. Names of the units or modules do not limit the units or modules themselves in some situations.

## Claims

1. A method for user equipment, UE, capability negotiation, comprising:
reporting (201), by a UE to a network, individual capabilities of the UE for respective radio access networks in multiple systems and a merged capability of the UE for all radio access networks in the multiple systems,
wherein the merged capability comprises: band combinations supportable by the UE for the respective radio access networks in the multiple systems and a capability parameter corresponding to each band, and the multiple systems comprise a new radio, NR, communication system, wherein the capability parameter comprises a multiple input multiple output, MIMO, parameter,
wherein the method further comprises: receiving, by the UE, a radio parameter sent from a master base station;
wherein the radio parameter is a radio parameter of a secondary link configured by a secondary base station based on capability indicating information recommended by the master base station, and the radio parameter from the secondary base station is forwarded to the UE via the master base station;
wherein the capability indicating information is recommended to the secondary base station by the master base station based on at least one of the merged capability of the UE for all the radio access networks in the multiple systems reported by the UE, a radio network condition of the master base station and a radio resource management strategy of the master base station; and
wherein when recommending the capability indicating information to the secondary base station, the master base station forwards, to the secondary base station, an individual capability of the UE for a radio access network to which the secondary base station belongs, the individual capability of the UE for the radio access network to which the secondary base station belongs being reported by the UE.

2. The method according to claim 1, wherein the capability parameter corresponding to each band is identified by an index; and
wherein a specific parameter value corresponding to each index is defined in an individual capability of the UE for each radio access network.

3. The method according to claim 1, wherein the reporting (201), by the UE to the network, the individual capabilities of the UE for the respective radio access networks in the multiple systems and the merged capability of the UE for all radio access networks in the multiple systems comprises:
reporting, by the UE to the network, the individual capabilities of the UE for the respective radio access networks in the multiple systems and the merged capability of the UE for all the radio access networks in the multiple systems, in response to triggering from a master base station.

4. The method according to claim 1, further comprising:
receiving, by the UE, a changed radio parameter sent from a master base station, wherein when the radio parameter needs to be changed, the master base station triggers a negotiation to determine the changed radio parameter; or
receiving, by the UE, a changed radio parameter sent from a master base station, wherein when a radio parameter needs to be changed, the secondary base station triggers a negotiation to determine the changed radio parameter.

5. A method for user equipment, UE, capability negotiation, comprising:
triggering, by a master base station, a UE to report individual capabilities of the UE for respective radio access networks in multiple systems and a merged capability of the UE for all radio access networks in the multiple systems,
wherein the merged capability comprises: band combinations supportable by the UE for the respective radio access networks in the multiple systems and a capability parameter corresponding to each band, and the multiple systems comprise a new radio, NR, communication system, wherein the capability parameter comprises a multiple input multiple output, MIMO, parameter,
wherein the method further comprises:
recommending, by the master base station to a secondary base station, capability indicating information based on at least one of the merged capability of the UE for all the radio access networks in the multiple systems reported by the UE, a radio network condition of the master base station and a radio resource management strategy of the master base station, and forwarding, by the master base station to the secondary base station, an individual capability of the UE for a radio access network to which the secondary base station belongs, the individual capability of the UE for the radio access network to which the secondary base station belongs being reported by the UE; and
transmitting, from the master base station to the UE, a radio parameter, wherein the radio parameter is a radio parameter of a secondary link configured by the secondary base station based on the capability indicating information recommended by the master base station,
wherein when recommending the capability indicating information to the secondary base station, the master base station forwards, to the secondary base station, an individual capability of the UE for a radio access network to which the secondary base station belongs, the individual capability of the UE for the radio access network to which the secondary base station belongs being reported by the UE.

6. The method according to claim 5, wherein the capability parameter corresponding to each band is identified by an index; and
wherein a specific parameter value corresponding to each index is defined in an individual capability of the UE for each radio access network.

7. The method according to claim 5, further comprising:
triggering and performing a negotiation by the master base station when the radio parameter needs to be changed, and transmitting a changed radio parameter from the master base station to the UE.

8. A user equipment, UE, comprising:
a transmitting module (510), configured to report, to a network, individual capabilities of the UE for respective radio access networks in multiple systems and a merged capability of the UE for all radio access networks in the multiple systems,
wherein the merged capability comprises: band combinations supportable by the UE for the respective radio access networks in the multiple systems and a capability parameter corresponding to each band, and the multiple systems comprise a new radio, NR, communication system, wherein the capability parameter comprises a multiple input multiple output, MIMO, parameter,
wherein the UE further comprises a receiving module (520), configured to receive a radio parameter sent from a master base station,
wherein the radio parameter is a radio parameter of a secondary link configured by a secondary base station based on capability indicating information recommended by the master base station, and the radio parameter from the secondary base station is forwarded to the UE via the master base station, wherein the capability indicating information is recommended to the secondary base station by the master base station based on at least one of the merged capability of the UE for all the radio access networks in the multiple systems reported by the UE, a radio network condition of the master base station and a radio resource management strategy of the master base station, and wherein when recommending the capability indicating information to the secondary base station, the master base station forwards, to the secondary base station, an individual capability of the UE for a radio access network to which the secondary base station belongs, the individual capability of the UE for the radio access network to which the secondary base station belongs being reported by the UE.

9. The UE according to claim 8, wherein the capability parameter corresponding to each band is identified by an index; and
wherein a specific parameter value corresponding to each index is defined in an individual capability of the UE for each radio access network.

10. The UE according to claim 8, wherein the transmitting module (510) is configured to report, to the network, the individual capabilities of the UE for the respective radio access networks in the multiple systems and the merged capability of the UE for all the radio access networks in the multiple systems, in response to triggering from a master base station.

11. The UE according to claim 8, wherein the receiving module (520) is further configured to receive a changed radio parameter sent from a master base station, wherein when the radio parameter needs to be changed, the master base station triggers a negotiation to determine the changed radio parameter; or
wherein the receiving module (520) is further configured to receive a changed radio parameter sent from a master base station, wherein when a radio parameter needs to be changed, the secondary base station triggers a negotiation to determine the changed radio parameter.

12. A base station, comprising a triggering module (710), configured to trigger a user equipment, UE, to report individual capabilities of the UE for respective radio access networks in multiple systems and a merged capability of the UE for all radio access networks in the multiple systems,
wherein the merged capability comprises: band combinations supportable by the UE for the respective radio access networks in the multiple systems and a capability parameter corresponding to each band, and the multiple systems comprise a new radio, NR, communication system, wherein the capability parameter comprises a multiple input multiple output, MIMO, parameter,
wherein the base station further comprises:
a recommending module (720), configured to recommend, to a secondary base station, capability indicating information based on at least one of the merged capability of the UE for all the radio access networks in the multiple systems reported by the UE, a radio network condition of a master base station and a radio resource management strategy of the master base station, and forward, to the secondary base station, an individual capability of the UE for a radio access network to which the secondary base station belongs, the individual capability of the UE for the radio access network to which the secondary base station belongs being reported by the UE; and
a transmitting module (730), configured to transmit a radio parameter to the UE, wherein the radio parameter is a radio parameter of a secondary link configured by the secondary base station based on the capability indicating information recommended by the master base station;
wherein when recommending the capability indicating information to the secondary base station, the master base station forwards, to the secondary base station, an individual capability of the UE for a radio access network to which the secondary base station belongs, the individual capability of the UE for the radio access network to which the secondary base station belongs being reported by the UE.

13. The base station according to claim 12,
wherein the capability parameter corresponding to each band is identified by an index; and
wherein a specific parameter value corresponding to each index is defined in an individual capability of the UE for a radio access network.

14. The base station according to claim 12, further comprising:
a negotiating module (740), configured to trigger and perform a negotiation when the radio parameter needs to be changed; wherein the transmitting module (730) is configured to transmit a changed radio parameter to the UE.

15. A computer readable medium, that stores thereon computer readable instructions that are executable by a processor, wherein the computer readable instructions, when executed by the processor, instruct the processor to perform steps of the method according to any one of claims 1 to 7.

## Patentansprüche

1. Verfahren zur Fähigkeitsaushandlung eines Endgeräts, UE, das umfasst:
Melden (201), mittels eines UE an ein Netzwerk, von individuellen Fähigkeiten des UE für jeweilige Funkzugangsnetzwerke in mehreren Systemen und einer zusammengeführten Fähigkeit des UE für sämtliche Funkzugangsnetzwerke in den mehreren Systemen, wobei die zusammengeführte Fähigkeit umfasst: Bandkombinationen, die von dem UE für die jeweiligen Funkzugangsnetzwerke in den mehreren System unterstützt werden können und einen jedem Band entsprechenden Fähigkeitsparameter, und wobei die mehreren Systeme ein Neufunk-, NR-, Kommunikationssystem aufweisen, wobei der Fähigkeitsparameter einen Multiple-Input-Multiple-Output-, MIMO, Parameter umfasst, wobei das Verfahren ferner umfasst: Empfangen, mittels des UE, eines von einer Master-Basisstation gesendeten Funkparameters;
wobei der Funkparameter ein Funkparameter einer sekundären Verbindung ist, die von einer sekundären Basisstation auf der Grundlage von fähigkeitsanzeigenden Informationen konfiguriert wird, die von der Master-Basisstation empfohlen werden, und der Funkparameter von der sekundären Basisstation über die Master-Basisstation an das UE weitergeleitet wird;
wobei die fähigkeitsanzeigenden Informationen der sekundären Basisstation von der Master-Basisstation empfohlen werden, und zwar auf der Grundlage von mindestens einem aus der zusammengeführten Fähigkeit des UE für sämtliche Funkzugangsnetzwerke in den mehreren Systemen, die von dem UE gemeldet wird, einem Funknetzwerkzustand der Master-Basisstation und einer Funkressourcenmanagementstrategie der Master-Basisstation; und
wobei beim Empfehlen der fähigkeitsanzeigenden Informationen an die sekundäre Basisstation, die Master-Basisstation eine individuelle Fähigkeit des UE für ein Funkzugangsnetzwerk, zu dem die sekundäre Basisstation gehört, an die sekundäre Basisstation weiterleitet, wobei die individuelle Fähigkeit des UE für das Funkzugangsnetzwerk, zu dem die sekundäre Basisstation gehört, von dem UE gemeldet wird.

2. Verfahren nach Anspruch 1, wobei der jedem Band entsprechende Fähigkeitsparameter durch einen Index identifiziert wird; und
wobei ein bestimmter Parameterwert, der jedem Index entspricht, in einem individuellen Fähigkeitsparameter des UE für jedes Funkzugangsnetzwerk definiert ist.

3. Verfahren nach Anspruch 1, wobei das Melden (201), mittels des UE an das Netzwerk, der individuellen Fähigkeit des UE für die jeweiligen Funkzugangsnetzwerke in den mehreren System und der zusammengenführten Fähigkeit des UE für sämtliche Funkzugangsnetzwerke in den mehreren Systemen umfasst:
Melden, mittels des UE an das Netzwerk, der individuellen Fähigkeiten des UE für die jeweiligen Funkzugangsnetzwerke in den mehreren Systemen und der zusammengenführten Fähigkeit des UE für sämtliche Funkzugangsnetzwerke in den mehreren Systemen als Reaktion auf die Auslösung von einer Master-Basisstation.

4. Verfahren nach Anspruch 1, das ferner umfasst:
Empfangen, mittels des UE, eines von einer Master-Basisstation gesendeten geänderten Funkparameters, wobei, wenn der Funkparameter geändert werden muss, die Master-Basisstation eine Aushandlung auslöst, um den geänderten Funkparameter zu bestimmen; oder
Empfangen, mittels des UE, eines von einer Master-Basisstation gesendeten geänderten Funkparameters, wobei, wenn ein Funkparameter geändert werden muss, die sekundäre Basisstation eine Aushandlung auslöst, um den geänderten Funkparameter zu bestimmen.

5. Verfahren zur Fähigkeitsaushandlung eines Endgeräts, UE, das umfasst:
Auslösen, mittels einer Master-Basisstation, eines UE, um individuelle Fähigkeiten des UE für jeweilige Funkzugangsnetzwerke in mehreren Systemen und eine zusammengeführte Fähigkeit des UE für sämtliche Funkzugangsnetzwerke in den mehreren Systemen zu melden, wobei die zusammengeführte Fähigkeit umfasst: Bandkombinationen, die von dem UE für die jeweiligen Funkzugangsnetzwerke in den mehreren System unterstützt werden können und einen jedem Band entsprechenden Fähigkeitsparameter, und wobei die mehreren Systeme ein Neufunk-, NR-, Kommunikationssystem aufweisen, wobei der Fähigkeitsparameter einen Multiple-Input-Multiple-Output-, MIMO, Parameter umfasst,
wobei das Verfahren ferner umfasst:
Empfehlen, mittels der Master-Basisstation an eine sekundäre Basisstation, von fähigkeitsanzeigenden Informationen auf der Grundlage von mindestens einem aus der zusammengeführten Fähigkeit des UE für sämtliche Funkzugangsnetzwerke, die von dem UE gemeldet wird, einem Funknetzwerkzustand der Master-Basisstation und einer Funkressourcenmanagementstrategie der Master-Basisstation, und Weiterleiten, mittels der Master-Basisstation an die sekundäre Basisstation, einer individuellen Fähigkeit des UE für ein Funkzugangsnetzwerk, zu dem die sekundäre Basisstation gehört, wobei die individuelle Fähigkeit des UE für das Funkzugangsnetzwerk, zu dem die sekundäre Basisstation gehört, von dem UE gemeldet wird; und
Senden, von der Master-Basisstation an das UE, eines Funkparameters, wobei der Funkparameter ein Funkparameter einer sekundären Verbindung ist, die von der sekundären Basisstation auf der Grundlage von fähigkeitsanzeigenden Informationen konfiguriert wird, die von der Master-Basisstation empfohlen werden,
wobei beim Empfehlen der fähigkeitsanzeigenden Informationen an die sekundäre Basisstation, die Master-Basisstation eine individuelle Fähigkeit des UE für ein Funkzugangsnetzwerk, zu dem die sekundäre Basisstation gehört, an die sekundäre Basisstation weiterleitet, wobei die individuelle Fähigkeit des UE für das Funkzugangsnetzwerk, zu dem die sekundäre Basisstation gehört, von dem UE gemeldet wird.

6. Verfahren nach Anspruch 5, wobei der jedem Band entsprechende Fähigkeitsparameter durch einen Index identifiziert wird; und
wobei ein bestimmter Parameterwert, der jedem Index entspricht, in einem individuellen Fähigkeitsparameter des UE für jedes Funkzugangsnetzwerk definiert ist.

7. Verfahren nach Anspruch 5, das ferner umfasst:
Auslösen und Durchführen einer Aushandlung mittels der Master-Basisstation, wenn der Funkparameter geändert werden muss, und Senden eines geänderten Funkparameters von der Master-Basisstation an das UE.

8. Endgerät, UE, das aufweist:
ein Sendemodul (510), das dazu ausgebildet ist, einem Netzwerk individuelle Fähigkeiten des UE für jeweilige Funkzugangsnetzwerke in mehreren Systemen und eine zusammengeführte Fähigkeit des UE für sämtliche Funkzugangsnetzwerke in den mehreren Systemen zu melden, wobei die zusammengeführte Fähigkeit umfasst: Bandkombinationen, die von dem UE für die jeweiligen Funkzugangsnetzwerke in den mehreren System unterstützt werden können und einen jedem Band entsprechenden Fähigkeitsparameter, und wobei die mehreren Systeme ein Neufunk-, NR-, Kommunikationssystem aufweisen, wobei der Fähigkeitsparameter einen Multiple-Input-Multiple-Output-, MIMO, Parameter aufweist,
wobei das UE fernere ein Empfangsmodul (520) aufweist, das dazu ausgebildet ist, einen von einer Master-Basisstation gesendeten Funkparameter zu empfangen,
wobei der Funkparameter ein Funkparameter einer sekundären Verbindung ist, die von einer sekundären Basisstation auf der Grundlage von fähigkeitsanzeigenden Informationen konfiguriert wird, die von der Master-Basisstation empfohlen werden, und der Funkparameter von der sekundären Basisstation über die Master-Basisstation an das UE weitergeleitet wird, wobei die fähigkeitsanzeigenden Informationen der sekundären Basisstation von der Master-Basisstation empfohlen werden, und zwar auf der Grundlage von mindestens einem aus der zusammengeführten Fähigkeit des UE für sämtliche Funkzugangsnetzwerke in den mehreren Systemen, die von dem UE gemeldet wird, einem Funknetzwerkzustand der Master-Basisstation und einer Funkressourcenmanagementstrategie der Master-Basisstation, und wobei beim Empfehlen der fähigkeitsanzeigenden Informationen an die sekundäre Basisstation, die Master-Basisstation eine individuelle Fähigkeit des UE für ein Funkzugangsnetzwerk, zu dem die sekundäre Basisstation gehört, an die sekundäre Basisstation weiterleitet, wobei die individuelle Fähigkeit des UE für das Funkzugangsnetzwerk, zu dem die sekundäre Basisstation gehört, von dem UE gemeldet wird.

9. UE nach Anspruch 8, wobei der jedem Band entsprechende Fähigkeitsparameter durch einen Index identifiziert wird; und
wobei ein bestimmter Parameterwert, der jedem Index entspricht, in einem individuellen Fähigkeitsparameter des UE für jedes Funkzugangsnetzwerk definiert ist.

10. UE nach Anspruch 8, wobei das Sendemodul (510) das dazu ausgebildet, dem Netzwerk die individuellen Fähigkeiten des UE für die jeweilige Funkzugangsnetzwerke in den mehreren System und die zusammengeführte Fähigkeit des UE für sämtliche Funkzugangsnetzwerke in den mehreren System als Reaktion auf das Auslösen von der Master-Basisstation zu melden.

11. UE nach Anspruch 8, wobei das Empfangsmodul (520) ferner dazu ausgebildet ist, einen von einer Master-Basisstation gesendeten geänderten Funkparameter zu empfangen, wobei, wenn der Funkparameter geändert werden muss, die Master-Basisstation eine Aushandlung auslöst, um den geänderten Funkparameter zu bestimmen; oder
wobei das Empfangsmodul (520) ferner dazu ausgebildet ist, einen von einer Master-Basisstation gesendeten geänderten Funkparameter zu empfangen, wobei, wenn ein Funkparameter geändert werden muss, die sekundäre Basisstation eine Aushandlung auslöst, um den geänderten Funkparameter zu bestimmen.

12. Basisstation, die ein Auslösemodul (710) aufweist, das dazu ausgebildet ist, ein Endgerät, UE, derart auszulösen, dass es individuellen Fähigkeiten des UE für die jeweilige Funkzugangsnetzwerke in mehreren System und eine zusammengeführte Fähigkeit des UE für sämtliche Funkzugangsnetzwerke in den mehreren System meldet, wobei die zusammengeführte Fähigkeit umfasst: Bandkombinationen, die von dem UE für die jeweiligen Funkzugangsnetzwerke in den mehreren System unterstützt werden können und einen jedem Band entsprechenden Fähigkeitsparameter, und wobei die mehreren Systeme ein Neufunk-, NR-, Kommunikationssystem aufweisen, wobei der Fähigkeitsparameter einen Multiple-Input-Multiple-Output-, MIMO, Parameter aufweist,
wobei die Basisstation ferner aufweist:
ein Empfehlungsmodul (720), das dazu ausgebildet ist, einer sekundären Basisstation fähigkeitsanzeigende Informationen zu empfehlen, und zwar auf der Grundlage von mindestens einem aus der zusammengeführten Fähigkeit des UE für sämtliche Funkzugangsnetzwerke in den mehreren System, die von dem UE gemeldet wird, einem Funknetzwerkzustand der Master-Basisstation und einer Funkressourcenmanagementstrategie der Master-Basisstation, und eine individuelle Fähigkeit des UE für ein Funkzugangsnetzwerk, zu dem die sekundäre Basisstation gehört, an die sekundäre Basisstation weiterzuleiten, wobei die individuelle Fähigkeit des UE für das Funkzugangsnetzwerk, zu dem die sekundäre Basisstation gehört, von dem UE gemeldet wird; und
ein Sendemodul (730), das dazu ausgebildet ist, einen Funkparameter an das UE zu senden, wobei der Funkparameter ein Funkparameter einer sekundären Verbindung ist, die von der sekundären Basisstation auf der Grundlage von fähigkeitsanzeigenden Informationen konfiguriert wird, die von der Master-Basisstation empfohlen werden;
wobei beim Empfehlen der fähigkeitsanzeigenden Informationen an die sekundäre Basisstation, die Master-Basisstation eine individuelle Fähigkeit des UE für ein Funkzugangsnetzwerk, zu dem die sekundäre Basisstation gehört, an die sekundäre Basisstation weiterleitet, wobei die individuelle Fähigkeit des UE für das Funkzugangsnetzwerk, zu dem die sekundäre Basisstation gehört, von dem UE gemeldet wird.

13. Basisstation nach Anspruch 12,
wobei der jedem Band entsprechende Fähigkeitsparameter durch einen Index identifiziert wird; und
wobei ein bestimmter Parameterwert, der jedem Index entspricht, in einem individuellen Fähigkeitsparameter des UE für jedes Funkzugangsnetzwerk definiert ist.

14. Basisstation nach Anspruch 12, die ferner aufweist:
ein Aushandlungsmodul (740), das dazu ausgebildet ist, eine Aushandlung auszulösen und durchzuführen, wenn der Funkparameter geändert werden muss; wobei das Sendemodul (730) das ausgebildet ist, einen geänderten Funkparameter an das UE zu senden.

15. Computerlesbares Medium, auf dem computerlesbare Anweisungen gespeichert sind, die von einem Prozessor ausgeführt werden können, wobei die computerlesbaren Anweisungen bei Ausführung durch den Prozessor den Prozessor anweisen, die Schritte des Verfahrens nach einem der Ansprüche 1 bis 7 durchzuführen.

## Revendications

1. Procédé permettant la négociation de la capacité d'un équipement utilisateur, UE, comprenant :
le signalement (201), par un UE à un réseau, de capacités individuelles de l'UE pour des réseaux d'accès radio respectifs dans de multiples systèmes et d'une capacité fusionnée de l'UE pour tous les réseaux d'accès radio dans les multiples systèmes,
dans lequel la capacité fusionnée comprend : des combinaisons de bandes pouvant être prises en charge par l'UE pour les réseaux d'accès radio respectifs dans les multiples systèmes et un paramètre de capacité correspondant à chaque bande, et les multiples systèmes comprennent un système de communication nouvelle radio, NR, dans lequel le paramètre de capacité comprend un paramètre entrée multiple sortie multiple, MIMO,
dans lequel le procédé comprend en outre : la réception, par l'UE, d'un paramètre radio envoyé depuis une station de base principale ;
dans lequel le paramètre radio est un paramètre radio d'une liaison secondaire configuré par une station de base secondaire sur la base des informations indiquant des capacités recommandées par la station de base principale, et le paramètre radio provenant de la station de base secondaire est transféré à l'UE par l'intermédiaire de la station de base principale ;
dans lequel les informations indiquant des capacités sont recommandées à la station de base secondaire par la station de base principale sur la base d'au moins l'une parmi une capacité fusionnée de l'UE pour tous les réseaux d'accès radio dans les multiples systèmes signalés par l'UE, une condition de réseau radio de la station de base principale et une stratégie de gestion de ressources radio de la station de base principale ; et
dans lequel lors de la recommandation des informations indiquant des capacités à la station de base secondaire, la station de base principale transfère, à la station de base secondaire, une capacité individuelle de l'UE pour un réseau d'accès radio auquel la station de base secondaire appartient, la capacité individuelle de l'UE pour le réseau d'accès radio auquel la station de base secondaire appartient étant signalée par l'UE.

2. Procédé selon la revendication 1, dans lequel le paramètre de capacité correspondant à chaque bande est identifié par un index ; et
dans lequel une valeur de paramètre spécifique correspondant à chaque index est définie dans une capacité individuelle de l'UE pour chaque réseau d'accès radio.

3. Procédé selon la revendication 1, dans lequel le signalement (201), par l'UE au réseau, des capacités individuelles de l'UE pour les réseaux d'accès radio respectifs dans les multiples systèmes et de la capacité fusionnée de l'UE pour tous les réseaux d'accès radio dans les multiples systèmes comprend :
le signalement, par l'UE au réseau, des capacités individuelles de l'UE pour les réseaux d'accès radio respectifs dans les multiples systèmes et de la capacité fusionnée de l'UE pour tous les réseaux d'accès radio dans les multiples systèmes, en réponse au déclenchement depuis une station de base principale.

4. Procédé selon la revendication 1, comprenant en outre :
la réception, par l'UE, d'un paramètre radio modifié envoyé depuis une station de base principale, dans lequel, lorsque le paramètre radio doit être modifié, la station de base principale déclenche une négociation pour déterminer le paramètre radio modifié ; ou
la réception, par l'UE, d'un paramètre radio modifié envoyé depuis une station de base principale, dans lequel, lorsqu'un paramètre radio doit être modifié, la station de base secondaire déclenche une négociation pour déterminer le paramètre radio modifié.

5. Procédé pour la négociation de la capacité d'un équipement utilisateur, UE, comprenant :
le déclenchement, par une station de base principale, d'un UE pour signaler des capacités individuelles de l'UE pour les réseaux d'accès radio respectifs dans de multiples systèmes et une capacité fusionnée de l'UE pour tous les réseaux d'accès radio dans les multiples systèmes,
dans lequel la capacité fusionnée comprend : des combinaisons de bandes pouvant être prises en charge par l'UE pour les réseaux d'accès radio respectifs dans les multiples systèmes et un paramètre de capacité correspondant à chaque bande, et les multiples systèmes comprennent un système de communication nouvelle radio, NR, dans lequel le paramètre de capacité comprend un paramètre entrée multiple sortie multiple, MIMO,
dans lequel le procédé comprend en outre :
la recommandation, par la station de base principale à une station de base secondaire, d'informations indiquant des capacités sur la base d'au moins l'une parmi une capacité fusionnée de l'UE pour tous les réseaux d'accès radio dans les multiples systèmes signalés par l'UE, une condition de réseau radio de la station de base principale et une stratégie de gestion de ressources radio de la station de base principale, et le transfert, par la station de base principale à la station de base secondaire, d'une capacité individuelle de l'UE pour un réseau d'accès radio auquel la station de base secondaire appartient, la capacité individuelle de l'UE pour le réseau d'accès radio auquel la station de base secondaire appartient étant signalée par l'UE ; et
la transmission, de la station de base principale à l'UE, d'un paramètre radio, dans lequel le paramètre radio est un paramètre radio d'une liaison secondaire configuré par la station de base secondaire sur la base des informations indiquant des capacités recommandées par la station de base principale,
dans lequel lors de la recommandation des informations indiquant des capacités à la station de base secondaire, la station de base principale transfère, à la station de base secondaire, une capacité individuelle de l'UE pour un réseau d'accès radio auquel la station de base secondaire appartient, la capacité individuelle de l'ue pour le réseau d'accès radio auquel la station de base secondaire appartient étant signalée par l'UE.

6. Procédé selon la revendication 5, dans lequel le paramètre de capacité correspondant à chaque bande est identifié par un index ; et
dans lequel une valeur de paramètre spécifique correspondant à chaque index est définie dans une capacité individuelle de l'ue pour chaque réseau d'accès radio.

7. Procédé selon la revendication 5, comprenant en outre :
le déclenchement et la réalisation d'une négociation par la station de base principale lorsque le paramètre radio doit être modifié, et la transmission d'un paramètre radio modifié de la station de base principale à l'UE.

8. Équipement utilisateur, UE, comprenant :
un module de transmission (510), configuré pour signaler, à un réseau, des capacités individuelles de l'UE pour les réseaux d'accès radio respectifs dans de multiples systèmes et une capacité fusionnée de l'UE pour tous les réseaux d'accès radio dans les multiples systèmes,
dans lequel la capacité fusionnée comprend : des combinaisons de bandes pouvant être prises en charge par l'UE pour les réseaux d'accès radio respectifs dans les multiples systèmes et un paramètre de capacité correspondant à chaque bande, et les multiples systèmes comprennent un système de communication nouvelle radio, NR, dans lequel le paramètre de capacité comprend un paramètre entrée multiple sortie multiple, MIMO,
dans lequel l'UE comprend en outre un module de réception (520), configuré pour recevoir un paramètre radio envoyé depuis une station de base principale,
dans lequel le paramètre radio est un paramètre radio d'une liaison secondaire configuré par une station de base secondaire sur la base d'informations indiquant des capacités recommandées par la station de base principale, et le paramètre radio provenant de la station de base secondaire est transféré à l'UE par l'intermédiaire de la station de base principale, dans lequel les informations indiquant des capacités sont recommandées à la station de base secondaire par la station de base principale sur la base d'au moins l'une parmi une capacité fusionnée de l'UE pour tous les réseaux d'accès radio dans les multiples systèmes signalés par l'UE, une condition de réseau radio de la station de base principale et une stratégie de gestion de ressources radio de la station de base principale, et dans lequel, lors de la recommandation des informations indiquant des capacités à la station de base secondaire, la station de base principale transfère, à la station de base secondaire, une capacité individuelle de l'UE pour un réseau d'accès radio auquel la station de base secondaire appartient, la capacité individuelle de l'UE pour le réseau d'accès radio auquel la station de base secondaire appartient étant signalée par l'UE.

9. UE selon la revendication 8, dans lequel le paramètre de capacité correspondant à chaque bande est identifié par un index ; et
dans lequel une valeur de paramètre spécifique correspondant à chaque index est définie dans une capacité individuelle de l'UE pour chaque réseau d'accès radio.

10. UE selon la revendication 8, dans lequel le module de transmission (510) est configuré pour signaler, au réseau, les capacités individuelles de l'UE pour les réseaux d'accès radio respectifs dans les multiples systèmes et la capacité fusionnée de l'UE pour tous les réseaux d'accès radio dans les multiples systèmes, en réponse au déclenchement depuis une station de base principale.

11. UE selon la revendication 8, dans lequel le module de réception (520) est en outre configuré pour recevoir un paramètre radio modifié envoyé depuis une station de base principale, dans lequel lorsque le paramètre radio doit être modifié, la station de base principale déclenche une négociation pour déterminer le paramètre radio modifié ; ou
dans lequel le module de réception (520) est en outre configuré pour recevoir un paramètre radio modifié envoyé depuis une station de base principale, dans lequel, lorsqu'un paramètre radio doit être modifié, la station de base secondaire déclenche une négociation pour déterminer le paramètre radio modifié.

12. Station de base, comprenant un module de déclenchement (710), configuré pour déclencher un équipement utilisateur, UE, pour signaler des capacités individuelles de l'UE pour des réseaux d'accès radio respectifs dans de multiples systèmes et une capacité fusionnée de l'UE pour tous les réseaux d'accès radio dans les multiples systèmes,
dans laquelle la capacité fusionnée comprend : des combinaisons de bandes pouvant être prises en charge par l'UE pour les réseaux d'accès radio respectifs dans les multiples systèmes et un paramètre de capacité correspondant à chaque bande, et les multiples systèmes comprennent un système de communication nouvelle radio, NR, dans lequel le paramètre de capacité comprend un paramètre entrée multiple sortie multiple, MIMO,
dans laquelle la station de base comprend en outre :
un module de recommandation (720), configuré pour recommander, à une station de base secondaire, des informations indiquant des capacités sur la base d'au moins l'une parmi une capacité fusionnée de l'UE pour tous les réseaux d'accès radio dans les multiples systèmes signalés par l'UE, une condition de réseau radio d'une station de base principale et une stratégie de gestion de ressources radio de la station de base principale, et transférer, à la station de base secondaire, une capacité individuelle de l'UE pour un réseau d'accès radio auquel la station de base secondaire appartient, la capacité individuelle de l'UE pour le réseau d'accès radio auquel la station de base secondaire appartient étant signalée par l'UE ; et
un module de transmission (730), configuré pour transmettre un paramètre radio à l'UE, dans lequel le paramètre radio est un paramètre radio d'une liaison secondaire configuré par la station de base secondaire sur la base des informations indiquant des capacités recommandées par la station de base principale ;
dans lequel lors de la recommandation des informations indiquant des capacités à la station de base secondaire, la station de base principale transfère, à la station de base secondaire, une capacité individuelle de l'UE pour un réseau d'accès radio auquel la station de base secondaire appartient, la capacité individuelle de l'UE pour le réseau d'accès radio auquel la station de base secondaire appartient étant signalée par l'UE.

13. Station de base selon la revendication 12,
dans laquelle le paramètre de capacité correspondant à chaque bande est identifié par un index ; et
dans laquelle une valeur de paramètre spécifique correspondant à chaque index est définie dans une capacité individuelle de l'UE pour un réseau d'accès radio.

14. Station de base selon la revendication 12, comprenant en outre :
un module de négociation (740), configuré pour déclencher et réaliser une négociation lorsque le paramètre radio doit être modifié ; dans laquelle le module de transmission (730) est configuré pour transmettre un paramètre radio modifié à l'UE.

15. Support lisible par ordinateur, qui stocke des instructions lisibles par ordinateur exécutables par un processeur, dans lequel les instructions lisibles par ordinateur, lorsqu'elles sont exécutées par le processeur, instruisent au processeur de réaliser les étapes du procédé selon l'une quelconque des revendications 1 à 7.
